# EUROPEAN PATENT SPECIFICATION

(11) **EP 3 006 152 B1**
(45) Date of publication and mention of the grant of the patent: **13.12.2017**
(21) Application number: 15771841.2
(22) Date of filing: 21.04.2015
(51) Int. Cl.: B23H 7/24, C22C 18/02

(54) **HIGH-PRECISION ZINC-BASED ALLOY ELECTRODE WIRE AND PREPARATION METHOD THEREFOR**
HOCHPRÄZISER ELEKTRODENDRAHT AUS EINER LEGIERUNG AUF ZINKBASIS UND HERSTELLUNGSVERFAHREN DAFÜR
FIL D'ÉLECTRODE D'ALLIAGE À BASE DE ZINC À HAUTE PRÉCISION ET SON PROCÉDÉ DE PRÉPARATION

(30) Priority: 13.08.2014 CN 201410398470
(43) Date of publication of application: 13.04.2016
(73) Proprietor: Ningbo Powerway Materialise Co., Ltd., Zhejiang 315137 (CN)
(72) Inventor: LIANG, Zhining, Ningbo Zhejiang 315137 (CN); GUO, Fanglin, Ningbo Zhejiang 315137 (CN); WAN, Linhui, Ningbo Zhejiang 315137 (CN); WU, Tong, Ningbo Zhejiang 315137 (CN)
(74) Representative: Belcher, Simon James
(86) International application number: PCT/CN2015/000279
(87) International publication number: WO 2016/023326

(56) References cited:
- EP-A1- 2 724 805
- CN-A- 1 269 274
- CN-A- 1 604 830
- CN-A- 101 234 442
- CN-A- 103 273 150
- CN-A- 103 273 150
- CN-A- 104 191 056
- JP-A- H1 158 139
- JP-A- 2003 039 247
- JP-A- 2007 136 579
- US-A1- 2008 245 773

## Description

### Field of the Invention

The present invention relates to the technical field of high-precision electrical spark wire cutting machining, in particular to a high-precision zinc-based alloy electrode wire and a manufacturing method thereof. An example of such a wire and such a method is disclosed by U S2014/0110379 A1.

### Description of the Prior Art

In recent years, with the need for machining micro parts, for example, special complex parts such as micro gears, micro splines and micro connectors, high-precision electrical spark cutting machining, due to its unique machining process, i.e., non-mechanical-contact machining, is particularly adaptive to requirements of manufacturing micro machines and is cost effective. Hence, it plays an important role in the production field of many micro machines, and has developed rapidly. Continuously exploring the high-precision electrical spark wire cutting machining technique in China and abroad has achieved great progress in terms of combination of the high-precision electrical spark wire cutting machining with manufacturing of micro machines and in terms of practical application thereof.

There are many factors that will influence the high-precision electrical spark wire cutting machining, for example, the precision of a machine tool, the performance of an electrode wire, the pulse power supply, the wiring system, the control system and the process planning, all of which will directly influence the machining precision and the quality of surface of micro parts. Hence, the key for the realization of the high-precision electrical spark wire cutting machining for micro and complex parts is to study the performance of the electrode wire and the cutting machining technique, in order to meet the requirements of the high-precision electrical spark wire cutting machining to a maximum extent. An electrode wire in the prior art generally has one or more layers of cores, the outermost layer is mostly an external shell constituted of copper in significant α-phase, zinc alloy in η-phase, or crystalline Cu-Zn alloy in these two phases. The structure of the external shell is generally in (α+β)-phase, β-phase, γ-phase or (β+γ)-phase. At present, there are various kinds of commercially available electrode wires, such as red copper electrode wires, also known as high-copper electrode wires. Such electrode wires have a single α-phase structure, very good toughness, and excellent electrical conductivity, and are capable of withstanding a maximum instantaneous high-pulse current and a large cutting current. However, such electrode wires generally have a low tensile strength. The tensile strength of a rigid wire is approximately 400 MPa to 500 MPa on average. As a result, such electrode wires are only suitable for special machining of special machine tools. As another example, brass electrode wires exist. The brass electrode wires, as the most common commercially available electrode wire, have a crystalline structure in (α+β)-phase. Such electrode wires may be endowed with varying tensile strengths by a series of stretching and thermal treatment processes so as to satisfy different equipment and application scenarios, and the tensile strength may reach above 1000 MPa. However, problems, such as, much copper powder on the surface of such electrode wires and large geometric error in the cross-section thereof, all result in the deterioration of discharge stability, thus heavily influencing the machining precision and the quality of surface of workpieces, and meanwhile, polluting components of the equipment and consequently increasing the loss of the equipment. As a further example, galvanized electrode wires exist. The core of such galvanized electrode wires is common brass. During preparation thereof, a layer of zinc is plated onto the surface to form an external shell with a significant η-phase structure. The gasification of zinc during cutting contributes to improvement of the flushing performance during surface cutting, so that the cut surfaces are smoother than ordinary brass wires. However, in practice, powder on such electrode wires is still likely to fall off, hindering further improvement of the machining precision. As a yet further example, coated electrode wires exist. The core of the electrode wires is mainly brass, red copper or other material, the structure of the skin layer thereof is in β-phase, γ-phase, or mixed (β+γ)-phase. Such electrode wires significantly improve the production efficiency, and meanwhile improve the cutting precision and the quality of the surface to some extent. However, although applicable to machining industries, such as, manufacturing of molds, complex parts like aircraft parts and medical parts, and large-thickness and large-size parts, such electrode wires are not optimized to the largest extent in the machining precision of cutting certain micro and complex parts. Especially with the development and mature application of micro machines, such electrode wires cannot meet requirements on the machining precision any more.

The reason why the electrode wires with an external shell in β-phase structure, γ-phase structure or (β+γ)-phase can improve the cutting efficiency is that, they can increase the discharge energy of the electrical spark to result in, during the electrical discharge, high explosive power and a large amount of rapid ablation, which are more advantageous for erosion of metal material. Hence, the cutting efficiency of such electrode wires is significantly improved when compared to that of ordinary electrode wires. However, due to high electrical discharge energy and high explosive power, during cutting with such electrode wires, pits on the surface of the cut material are large. This is disadvantageous for improvement of the cutting precision of the electrode wire and the surface smoothness. The galvanized electrode wires in significant η-phase discharge gently during cutting and produce a low amount of erosion and small pits on the surface of the cut material, all of which are advantageous for improvement of the cutting precision. However, since the surface of such electrode wires is substantially pure zinc having a low melting point, the vaporization enthalpy is small, the heat taken away by the rapid gasification is small, and the effective flushing result is poor. As a result, the metal particles produced will block gaps easily, if not removed in time, to cause defects. Hence, a large amount of working solution must be injected during cutting for secondary flushing, in order to avoid wire breaking due to thermal accumulation. However, in case of improper flushing or unstable application of the working solution, the machining precision will be influenced. High requirements are also placed on the flushing system of the machine tool.

### Summary of the Invention

A first technical problem to be solved by the present invention is to provide, in view of the prior art, a high-precision zinc-based alloy electrode wire having high cutting precision and giving high surface smoothness of cut material.

A second technical problem to be solved by the present invention is to provide a method for manufacturing the high-precision zinc-based alloy electrode wire described above.

The technical solution employed by the present invention to solve the above technical problems is as follows: a high-precision zinc-based alloy electrode wire, comprising a core and an external shell covering the core, the core being made of brass, characterized in that the composition in mass percentage of the components of the external shell is:
Zn: 70.5-95%;
Cu: 2.5-27%;
X: 0.02-4.0%;
Y: 0.002-0.4%; and unavoidable impurities introduced by raw material, and the total content of the unavoidable impurities is less than or equal to 0.3%; where, X refers to any two elements selected from Ni, Ag, Cr, Si and Zr, and the content of each of these two elements is 0.01-2.0%; and Y refers to any two elements selected from Ti, Al, Co, B, and P, and the content of each of these two elements is 0.001-0.2%;
   the external shell has a thickness of 2-4 um, the content of ε-phase in a structure of the external shell is above 80 wt%, and a remainder component of the external shell is either γ-phase or η-phase; and the ε-phase is uniformly distributed on a surface of the core.

Preferably, the composition in mass percentage of the components of the external shell is:
Zn: 78.5-85%;
Cu: 12.5-19%;
X: 0.02-4.0%;
Y: 0.002-0.4%; and unavoidable impurities introduced by raw material;
and the external shell has a structure wholly in ε-phase, and the ε-phase is uniformly distributed on a surface of the core.

A method for manufacturing the high-precision zinc-based alloy electrode wire described above is characterized by comprising the following steps:
1) mixing alloy in proportion by mixing, in mass percentage: 57-68% Cu, 0.03-4.5% X, 0.004-0.5% Y, with the balance being Zn and unavoidable impurities which originate from raw material or are introduced during smelting, and the total content of unavoidable impurities is less than or equal to 0.5%; where, X refers to any two elements selected from Ni, Ag, Cr, Si, and Zr, and the content of each of these two elements is 0.015-2.25%; and Y refers to any two elements selected from Ti, Al, Co, B, and P, and the content of each of these two elements is 0.002-0.25%;
2) smelting mixed alloy in an induction furnace, and casting smelted mixed alloy into an alloy wire blank with a diameter of 8-15 mm;
3) obtaining a base wire blank with a diameter of 0.5-5 mm by extruding or multi-stage stretching and annealing the wire blank;
4) degreasing the base wire blank, washing the base wire blank with acid, washing the base wire blank with water, then galvanizing the base wire blank, with an electroplating current of 1500-3000 A and a voltage of 150-220 V, to obtain a first wire blank with a galvanized layer having a thickness of 0.5-50 um;
5) stretching and annealing the electroplated first wire blank to obtain a second wire blank;
6) finally, subjecting the second wire blank to alloying thermal treatment to obtain a finished electrode wire with a diameter of 0.05-0.35 mm.

In Step 5, the stretching is done with a speed of 500-2000 m/min, the annealing is done with a voltage of 10-100 V and a current of 10-50 A. This makes the zinc atoms in the galvanized layer diffusively migrate toward the base wire blank easily to form a new crystalline structure, which is of benefit for the subsequent thermal treatment.

In Step 6, the thermal treatment is carried out at a temperature of 50-230 degrees for 3-30 hrs. This is of benefit for formation of the external shell with ε-phase structure in the finished product.

Compared with the prior art, the present invention has the following advantages:
(1) Compared with the ordinary coated electrode wires, the electrode wire in the present invention can provide sufficient positive and negative electrons quickly during cutting, discharge gently during cutting, and thus maintain effective cutting. Meanwhile, the external shell has a certain Cu-Zn alloy layer which increases the temperature of gasification and thus facilitates the dissipation of heat. As a result, the flushing effect is improved and the electrode helps to improve the precision of the cutting machining and to obtain excellent quality of surface.
(2) The addition of elements X and Y into the electrode wire of the present invention will increase the dislocation of Cu-Zn alloy atoms during stretching, it will result in large distortion of lattices at the grain boundary and the energy will be increased. Accordingly, during the thermal treatment the zinc atoms in η-phase of the external shell are likely to diffusively migrate toward the core ((α+β)-phase), aiding the formation of the ε-phase structure in the external shell; the electrode wire having the external shell with a structure in ε-phase (above 80 wt%) has excellent toughness, and can effectively resist shake of the electrode wire resulting from the current and the flushing force during the cutting, thus preventing the electrode wire from being fractured due to inadequate toughness. Meanwhile, due to a relatively high melting point, such an electrode wire can withstand an instantaneous high-pulse current and a large cutting current, and can have short instantaneous discharge gaps, giving high surface smoothness of the cut metal workpieces, and good quality of surface. As a result, the cutting precision is effectively improved. Such an electrode wire is especially applicable to finishing and multiple cutting of more than three times. Meanwhile, the addition of elements X and Y can decrease the temperature of the thermal treatment and shorten the time required for the thermal treatment, so that the machining efficiency is improved.
(3) The manufacturing method employed in the present invention is of benefit for formation of ε-phase in the external shell of the finished electrode wire and avoidance of the further diffusion of crystal to form a γ-phase or the like. Furthermore, the method has simple process, high maneuverability, few steps and simple production equipment, and it can easily manufacture satisfactory products, so as to facilitate large-scale and automated production.

### Brief Description of the Drawings

Fig. 1 is a sectional view of a second wire blank according to Embodiment 1 of the present invention;
Fig. 2 is a sectional view of a finished electrode wire according to Embodiment 1 of the present invention;
Fig. 3 to Fig. 5 are views showing a metallurgical structure of a finished electrode wire according to Embodiments 1 to 3;
Fig. 6 is a view showing a metallurgical structure of a finished electrode wire according to Embodiments 4, 9 and 10;
Fig. 7 is a view showing a metallurgical structure of a finished electrode wire according to Embodiments 5, 6, 7, and 8; and
Fig. 8 to Fig. 11 are views showing a metallurgical structure of a finished electrode wire according to Comparative Examples 1 to 4.

### Detailed description of the preferred embodiment

The present invention is described in further detail below in conjunction with the embodiments in the accompanying drawings:

### Embodiment 1

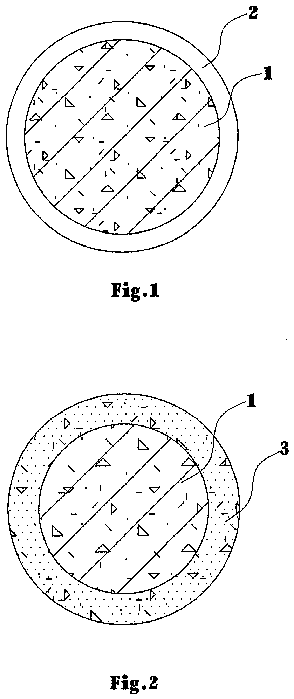

The following steps are carried out: mixing alloy in proportion by mixing the following materials in mass percentage: 65% Cu, 2.0% Ni, 1.2% Si, 0.12% Ti and 0.2% Co, with the balance being Zn and unavoidable impurities which originate from raw material or are introduced during smelting, and the total content of unavoidable impurities is 0.5%; smelting above mixed alloy in an induction furnace, and casting smelted mixed alloy into an alloy wire blank with a diameter of 9 mm; then, obtaining a base wire blank with a diameter of 0.5 mm by extruding or multi-stage stretching and annealing the wire blank; then, degreasing the base wire blank, washing the base wire blank with acid, washing the base wire blank with water, then galvanizing the base wire blank, with an electroplating current of 2000 A and a voltage of 200 V, to obtain a first wire blank with a galvanized layer having a thickness of 0.5 um; next, stretching and annealing the first wire blank to obtain a second wire blank, which includes a core 1 and a plated layer 2, as shown in Fig.1, where the stretching is done with a speed of 600 m/min, the annealing is done with a voltage of 20 V and a current of 15 A; subjecting the second wire blank to alloying thermal treatment to obtain a finished electrode wire with a diameter of 0.10 mm and having an external shell with a thickness of 2 um, as shown in Fig.1 and Fig. 2, wherein the thermal treatment is carried out at 172°C for 11 hrs. During the thermal treatment, the core 1 and the plated layer 2 diffuse, and the diameter of the core 1 is decreased while the thickness of the plated layer 2 is increased to form the stable external shell 3. Finally, the finished product obtained after the thermal treatment is wound onto shafts of different types.

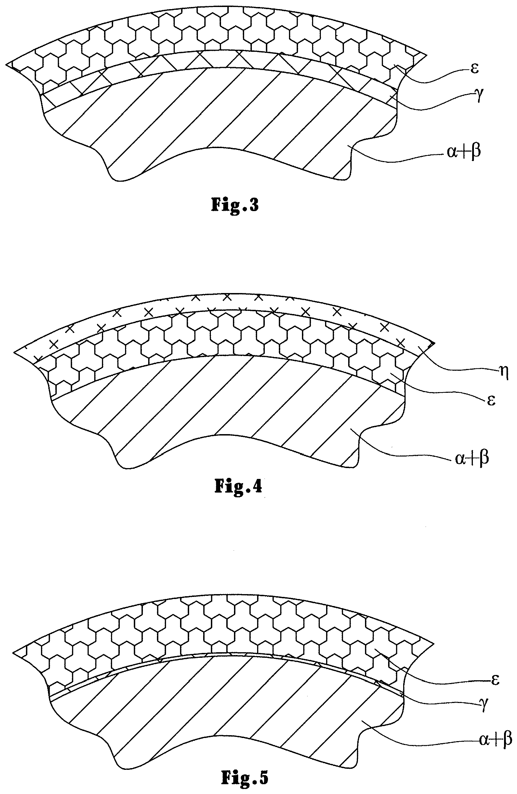

The chemical composition of the external shell of the finished electrode wire is: 70.5% Zn, 27% Cu, 1.5% Ni, 0. 6% Si, 0.1% Ti, 0.1% Co and 0.2% impurities. In this embodiment, the addition of Ni, Si, Ti and Co will increase the dislocation of Cu-Zn alloy atoms in the wire blank during stretching, it will result in large distortion of lattices at the grain boundary and the energy will be increased. Accordingly, during the thermal treatment the zinc atoms in η-phase of the external shell are likely to diffusively migrate toward the core 1 ((α+β)-phase), aiding the formation of the ε-phase structure in the external shell. The atoms transfer between the external shell and the core, accordingly, the defects resulting from the stretching such as atomic dislocation and vacancies, are gradually reduced, the dislocation density is decreased too, and the activation energy of diffusion is decreased. Meanwhile, the melting point of the ε-phase structure is gradually increased compared to that of the original pure zinc in η-phase, and the bonding force among the atoms is strengthened. Furthermore, it is easy to form a ε-phase structure in the external shell under the thermal treatment conditions of this embodiment. As shown in Fig. 3, the core in the finished electrode wire is in (α+β)-phase, the ε-phase in the structure of the external shell has a content of 86 wt% and is uniformly distributed on the surface of the core, and the remainder is in γ-phase.

The elongation rate of the finished electrode wire is tested by a universal electronic stretcher, and the melting point of the external shell thereof is tested by a differential thermal analyzer. The electrical spark machining precision and cutting speed of the high-precision zinc-based alloy electrode wire prepared in this embodiment are tested, with material SKD61 as an object material. All the test result data is shown in Table 1.

### Embodiment 2

The following steps are carried out: mixing alloy in proportion by mixing the following materials in mass percentage: 66% Cu, 1.5% Cr, 1.5% Zr, 0.15% P and 0.06% B, with the balance being Zn and unavoidable impurities which originate from raw material or are introduced during smelting, and the total content of unavoidable impurities is 0.3%; smelting above mixed alloy in an induction furnace, and casting smelted mixed alloy into an alloy wire blank with a diameter of 8 mm; then, obtaining a base wire blank with a diameter of 3 mm by extruding or multi-stage stretching and annealing the wire blank; then, degreasing the base wire blank, washing the base wire blank with acid, washing the base wire blank with water, then galvanizing the base wire blank, with an electroplating current of 1500 A and a voltage of 200 V, to obtain a first wire blank with a galvanized layer having a thickness of 40 um; next, stretching and annealing the electroplated first wire blank to obtain a second wire blank, the stretching is done with a speed of 500 m/min, the annealing is done with a voltage of 80 V and a current of 50 A; subjecting the second wire blank to alloying thermal treatment to obtain a finished electrode wire with a diameter of 0.10 mm and having an external shell with a thickness of 4 um, the thermal treatment is carried out at 121°C for 23 hrs. Finally, the finished product obtained after the thermal treatment is wound onto shafts of different types.

The chemical composition of the external shell of the finished electrode wire is: 95% Zn, 2.5% Cu, 1.0% Cr, 1.1% Zr, 0.1% P, 0.03% B and 0.27% impurities. In this embodiment, the addition of Cr, Zr, P and B will increase the dislocation of Cu-Zn alloy atoms in the wire blank during stretching, it will result in large distortion of lattices at the grain boundary and the energy will be increased. Accordingly, during the thermal treatment the zinc atoms in η-phase of the external shell are likely to diffusively migrate toward the core ((α+β)-phase), aiding the formation of the ε-phase structure in the external shell. The atoms transfer between the external shell and the core, accordingly, the defects resulting from the stretching such as atomic dislocation and vacancies, are gradually reduced, the dislocation density is decreased too, and the activation energy of diffusion is decreased. Meanwhile, the melting point of the ε-phase structure is gradually increased compared to that of the original pure zinc in η-phase, and the bonding force among the atoms is strengthened. Furthermore, it is easy to form a ε-phase structure in the external shell under the thermal treatment conditions of this embodiment. As shown in Fig. 4, the core in the finished electrode wire is in (α+β)-phase, the ε-phase in the structure of the external shell has a content of 92 wt% and is uniformly distributed on the surface of the core, and the remainder is in η-phase.

The elongation rate of the finished electrode wire is tested by a universal electronic stretcher, and the melting point of the external shell thereof is tested by a differential thermal analyzer. The electrical spark machining precision and cutting speed of the high-precision zinc-based alloy electrode wire prepared in this embodiment are tested, with material SKD61 as an object material. All the test result data is shown in Table 1.

### Embodiment 3

The following steps are carried out: mixing alloy in proportion by mixing the following materials in mass percentage: 60% Cu, 0.12% Si, 0.07% Ag, 0.18% Ti, 0.02% B, with the balance being Zn and unavoidable impurities which originate from raw material or are introduced during smelting, and the total content of unavoidable impurities is 0.3%; smelting above mixed alloy in an induction furnace, and casting smelted mixed alloy into an alloy wire blank with a diameter of 10 mm; then, obtaining a base wire blank with a diameter of 4 mm by extruding or multi-stage stretching and annealing the wire blank; then, degreasing the base wire blank, washing the base wire blank with acid, washing the base wire blank with water, then galvanizing the base wire blank, with an electroplating current of 2500 A and a voltage of 150 V, to obtain a first wire blank with a galvanized layer having a thickness of 40 um; next, stretching and annealing the electroplated first wire blank to obtain a second wire blank, the stretching is done with a speed of 1000 m/min, the annealing is done with a voltage of 55 V and a current of 30 A; subjecting the second wire blank to alloying thermal treatment to obtain a finished electrode wire with a diameter of 0.10 mm and having an external shell with a thickness of 3 um, the thermal treatment is carried out at 202°C for 5 hrs. Finally, the finished product obtained after the thermal treatment is wound onto shafts of different types.

The chemical composition of the external shell of the finished electrode wire is: 75% Zn, 24.5% Cu, 0.11% Si, 0.06% Ag, 0.15% Ti, 0.015% B and 0.165% impurities. In this embodiment, the addition of Si, Ag, Ti and B will increase the dislocation of Cu-Zn alloy atoms in the wire blank during the stretching, it will result in large distortion of lattices at the grain boundary and the energy will be increased. Accordingly, during the thermal treatment the zinc atoms in η-phase of the external shell are likely to diffusively migrate toward the core ((α+β)-phase), aiding the formation of the ε-phase structure in the external shell. The atoms transfer between the external shell and the core, accordingly, the defects resulting from the stretching such as atomic dislocation and vacancies, are gradually reduced, the dislocation density is decreased too, and the activation energy of diffusion is decreased. Meanwhile, the melting point of the ε-phase structure is gradually increased compared to that of the original pure zinc in η-phase, and the bonding force among the atoms is strengthened. Furthermore, it is easy to form a ε-phase structure in the external shell under the thermal treatment conditions of this embodiment. As shown in Fig. 5, the core in the finished electrode wire is in (α+β)-phase, the ε-phase in the structure of the external shell has a content of 95 wt% and is uniformly distributed on the surface of the core, and the remainder is in γ-phase.

The elongation rate of the finished electrode wire is tested by a universal electronic stretcher, and the melting point of the external shell thereof is tested by a differential thermal analyzer. The electrical spark machining precision and cutting speed of the high-precision zinc-based alloy electrode wire prepared in this embodiment are tested, with material SKD61 as an object material. All the test result data is shown in Table 1.

### Embodiment 4

The following steps are carried out: mixing alloy in proportion by mixing the following materials in mass percentage: 57% Cu, 2.25% Ni, 0.9% Cr, 0.01% Ti, 0.015% Co, with the balance being Zn and unavoidable impurities which originate from raw material or are introduced during smelting, and the total content of unavoidable impurities is 0.5%; smelting above mixed alloy in an induction furnace, and casting smelted mixed alloy into an alloy wire blank with a diameter of 12 mm; then, obtaining a base wire blank with a diameter of 2 mm by extruding or multi-stage stretching and annealing the wire blank; then, degreasing the base wire blank, washing the base wire blank with acid, washing the base wire blank with water, then galvanizing the base wire blank, with an electroplating current of 2500 A and a voltage of 220 V, to obtain a first wire blank with a galvanized layer having a thickness of 15 um; next, stretching and annealing the electroplated first wire blank to obtain a second wire blank, the stretching is done with a speed of 1500 m/min, the annealing is done with a voltage of 10 V and a current of 15 A; subjecting the second wire blank to alloying thermal treatment to obtain a finished electrode wire with a diameter of 0.10 mm and having an external shell with a thickness of 3 um, the thermal treatment is carried out at 60°C for 26 hrs. Finally, the finished product obtained after the thermal treatment is wound onto shafts of different types.

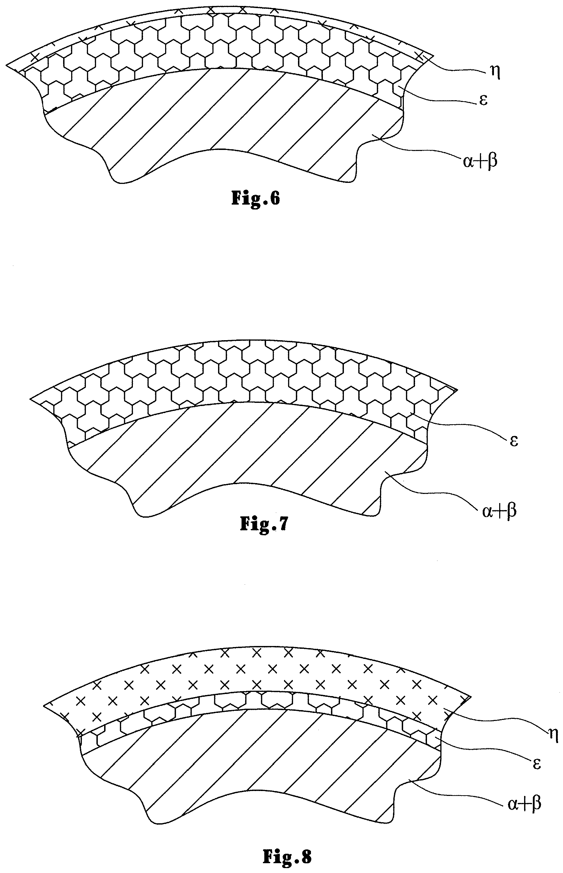

The chemical composition of the external shell of the finished electrode wire is: 90% Zn, 7.5% Cu, 2% Ni, 0.3% Cr, 0.007% Ti, 0.005% Co, and 0.188% impurities. In this embodiment, the addition of Ni, Cr, Ti and Co will increase the dislocation of Cu-Zn alloy atoms in the wire blank during the stretching , it will result in large distortion of lattices at the grain boundary and the energy will be increased. Accordingly, during the thermal treatment the zinc atoms in η-phase of the external shell are likely to diffusively migrate toward the core ((α+β)-phase), aiding the formation of the ε-phase structure in the external shell. The atoms transfer between the external shell and the core, accordingly, the defects resulting from the stretching such as atomic dislocation and vacancies, are gradually reduced, the dislocation density is decreased too, and the activation energy of diffusion is decreased. Meanwhile, the melting point of the ε-phase structure is gradually increased compared to that of the original pure zinc in η-phase, and the bonding force among the atoms is strengthened. Furthermore, it is easy to form a ε-phase structure in the external shell under the thermal treatment conditions of this embodiment. As shown in Fig. 6, the core in the finished electrode wire is in (α+β)-phase, the ε-phase in the structure of the external shell has a content of 98 wt% and is uniformly distributed on the surface of the core, and the remainder is in η-phase.

The elongation rate of the finished electrode wire is tested by a universal electronic stretcher, and the melting point of the external shell thereof is tested by a differential thermal analyzer. The electrical spark machining precision and cutting speed of the high-precision zinc-based alloy electrode wire prepared in this embodiment are tested, with material SKD61 as an object material. All the test result data is shown in Table 1.

### Embodiment 5

The following steps are carried out: mixing alloy in proportion by mixing the following materials in mass percentage: 60% Cu,1.8% Ni,0.1% Si,0.12% P,0.07% B, with the balance being Zn and unavoidable impurities which originate from raw material or are introduced during smelting, and the total content of unavoidable impurities is 0.4%; smelting above mixed alloy in an induction furnace, and casting smelted mixed alloy into an alloy wire blank with a diameter of 15 mm; then, obtaining a base wire blank with a diameter of 1 mm by extruding or multi-stage stretching and annealing the wire blank; then, degreasing the base wire blank, washing the base wire blank with acid, washing the base wire blank with water, then galvanizing the base wire blank, with an electroplating current of 3000 A and a voltage of 220 V, to obtain a first wire blank with a galvanized layer having a thickness of 10 um; next, stretching and annealing the electroplated first wire blank to obtain a second wire blank, the stretching is done with a speed of 2000 m/min, the annealing is done with a voltage of 40 V and a current of 20 A; subjecting the second wire blank to alloying thermal treatment to obtain a finished electrode wire with a diameter of 0.10 mm and having an external shell with a thickness of 3 um, the thermal treatment is carried out at 83°C for 19 hrs. Finally, the finished product obtained after the thermal treatment is wound onto shafts of different types.

The chemical composition of the external shell of the finished electrode wire is: 82% Zn, 16.4% Cu, 1.2% Ni, 0.05% Si, 0.07% P, 0.04% B, and 0.24% impurities. In this embodiment, the addition of Ni, Si, P and B will increase the dislocation of Cu-Zn alloy atoms in the wire blank during the stretching, it will result in large distortion of lattices at the grain boundary and the energy will be increased. Accordingly, during the thermal treatment the zinc atoms in η-phase of the external shell are likely to diffusively migrate toward the core ((α+β)-phase), aiding the formation of the ε-phase structure in the external shell. The atoms transfer between the external shell and the core, accordingly, the defects resulting from the stretching such as atomic dislocation and vacancies, are gradually reduced, the dislocation density is decreased too, and the activation energy of diffusion is decreased. Meanwhile, the melting point of the ε-phase structure is gradually increased compared to that of the original pure zinc in η-phase, and the bonding force among the atoms is strengthened. Furthermore, it is easy to form a ε-phase structure in the external shell under the thermal treatment conditions of this embodiment. As shown in Fig. 7, the core in the finished electrode wire is in (α+β)-phase, the ε-phase in the structure of the external shell has a content of nearly 100 wt% and is uniformly distributed on the surface of the core, and there is no other phase in the structure of the external shell. The expression "the ε-phase has a content of nearly 100 wt%" means that the metallurgical structure of the external shell is wholly in ε-phase, there is no other phase in the metallurgical structure of the external shell except the ε-phase, but the external shell maybe has some oxide or impurities etc. In the specification of the present invention, the expression "the ε-phase has a content of nearly 100 wt%" should be understood to have the above stated meaning.

The elongation rate of the finished electrode wire is tested by a universal electronic stretcher, and the melting point of the external shell thereof is tested by a differential thermal analyzer. The electrical spark machining precision and cutting speed of the high-precision zinc-based alloy electrode wire prepared in this embodiment are tested, with material SKD61 as an object material. All the test result data is shown in Table 1.

### Embodiment 6

The following steps are carried out: mixing alloy in proportion by mixing the following materials in mass percentage: 68% Cu, 0.8% Zr, 0.04% Cr, 0.016% Ti and 0.002% Al, with the balance being Zn and unavoidable impurities which originate from raw material or are introduced during smelting, and the total content of unavoidable impurities is0.2%; smelting above mixed alloy in an induction furnace, and casting smelted mixed alloy into an alloy wire blank with a diameter of 11 mm; then, obtaining a base wire blank with a diameter of 5 mm by extruding or multi-stage stretching and annealing the wire blank; then, degreasing the base wire blank, washing the base wire blank with acid, washing the base wire blank with water, then galvanizing the base wire blank, with an electroplating current of 3000 A and a voltage of 180 V, to obtain a first wire blank with a galvanized layer having a thickness of 50 um; next, stretching and annealing the electroplated first wire blank to obtain a second wire blank, the stretching is done with a speed of 1500 m/min, the annealing is done with a voltage of 100 V and a current of 10 A; subjecting the second wire blank to alloying thermal treatment to obtain a finished electrode wire with a diameter of 0.10 mm and having an external shell with a thickness of 3.5 um, the thermal treatment is carried out at 163°C for 8 hrs. Finally, the finished product obtained after the thermal treatment is wound onto shafts of different types.

The chemical composition of the external shell of the finished electrode wire is: 80% Zn, 19.2% Cu, 0.5% Zr, 0.02% Cr, 0.008% Ti, 0.001% A1 and 0.271% impurities. In this embodiment, the addition of Zr, Cr, Ti and Al will increase the dislocation of Cu-Zn alloy atoms in the wire blank during the stretching, it will result in large distortion of lattices at the grain boundary and the energy will be increased. Accordingly, during the thermal treatment the zinc atoms in η-phase of the external shell are likely to diffusively migrate toward the core ((α+β)-phase), aiding the formation of the ε-phase structure in the external shell. The atoms transfer between the external shell and the core, accordingly, the defects resulting from the stretching such as atomic dislocation and vacancies, are gradually reduced, the dislocation density is decreased too, and the activation energy of diffusion is decreased. Meanwhile, the melting point of the ε-phase structure is gradually increased compared to that of the original pure zinc in η-phase, and the bonding force among the atoms is strengthened. Furthermore, it is easy to form a ε-phase structure in the external shell under the thermal treatment conditions of this embodiment. As shown in Fig. 7, the core in the finished electrode wire is in (α+β)-phase, the ε-phase in the structure of the external shell has a content of nearly 100 wt% and is uniformly distributed on the surface of the core, and there is no other phase in the structure of the external shell.

The elongation rate of the finished electrode wire is tested by a universal electronic stretcher, and the melting point of the external shell thereof is tested by a differential thermal analyzer. The electrical spark machining precision and cutting speed of the high-precision zinc-based alloy electrode wire prepared in this embodiment are tested, with material SKD61 as an object material. All the test result data is shown in Table 1.

### Embodiment 7

The following steps are carried out: mixing alloy in proportion by mixing the following materials in mass percentage: 65% Cu, 2.25% Ni, 0.015% Si, 0.14% Ti and 0.25% Co, with the balance being Zn and unavoidable impurities which originate from raw material or are introduced during smelting, and the total content of unavoidable impurities is 0.5%; smelting above mixed alloy in an induction furnace, and casting smelted mixed alloy into an alloy wire blank with a diameter of 13 mm; then, obtaining a base wire blank with a diameter of 3 mm by extruding or multi-stage stretching and annealing the wire blank; then, degreasing the base wire blank, washing the base wire blank with acid, washing the base wire blank with water, then galvanizing the base wire blank, with an electroplating current of 2000 A and a voltage of 200 V, to obtain a first wire blank with a galvanized layer having a thickness of 30 um; next, stretching and annealing the first wire blank to obtain a second wire blank, which includes a core 1 and a plated layer 2, as shown in Fig.1, where the stretching is done with a speed of 600 m/min, the annealing is done with a voltage of 20 V and a current of 15 A; subjecting the second wire blank to alloying thermal treatment to obtain a finished electrode wire with a diameter of 0.10 mm and having an external shell with a thickness of 2.5 um, the thermal treatment is carried out at 50°C for 30 hrs. Finally, the finished product obtained after the thermal treatment is wound onto shafts of different types.

The chemical composition of the external shell of the finished electrode wire is: 78.5% Zn, 19% Cu, 1.9% Ni, 0.01% Si, 0.12% Ti, 0.2% Co and 0.27% impurities. In this embodiment, the addition of Ni, Si, Ti and Co will increase the dislocation of Cu-Zn alloy atoms in the wire blank during the stretching, it will result in large distortion of lattices at the grain boundary and the energy will be increased. Accordingly, during the thermal treatment the zinc atoms in η-phase of the external shell are likely to diffusively migrate toward the core ((α+β)-phase), aiding the formation of the ε-phase structure in the external shell. The atoms transfer between the external shell and the core, accordingly, the defects resulting from the stretching such as atomic dislocation and vacancies, are gradually reduced, the dislocation density is decreased too, and the activation energy of diffusion is decreased. Meanwhile, the melting point of the ε-phase structure is gradually increased compared to that of the original pure zinc in η-phase, and the bonding force among the atoms is strengthened. Furthermore, it is easy to form a ε-phase structure in the external shell under the thermal treatment conditions of this embodiment. As shown in Fig. 7, the core in the finished electrode wire is in (α+β)-phase, the ε-phase in the structure of the external shell has a content of nearly 100 wt% and is uniformly distributed on the surface of the core, and there is no other phase in the structure of the external shell.

The elongation rate of the finished electrode wire is tested by a universal electronic stretcher, and the melting point of the external shell thereof is tested by a differential thermal analyzer. The electrical spark machining precision and cutting speed of the high-precision zinc-based alloy electrode wire prepared in this embodiment are tested, with material SKD61 as an object material. All the test result data is shown in Table 1.

### Embodiment 8

The following steps are carried out: mixing alloy in proportion by mixing the following materials in mass percentage: 60% Cu, 1.0% Ag, 2.1% Ni, 0.15% A1 and 0.09% P, with the balance being Zn and unavoidable impurities which originate from raw material or are introduced during smelting, and the total content of unavoidable impurities is 0.4%; smelting above mixed alloy in an induction furnace, and casting smelted mixed alloy into an alloy wire blank with a diameter of 15 mm; then, obtaining a base wire blank with a diameter of 2 mm by extruding or multi-stage stretching and annealing the wire blank; then, degreasing the base wire blank, washing the base wire blank with acid, washing the base wire blank with water, then galvanizing the base wire blank, with an electroplating current of 3000 A and a voltage of 220 V, to obtain a first wire blank with a galvanized layer having a thickness of 25 um; next, stretching and annealing the electroplated first wire blank to obtain a second wire blank, the stretching is done with a speed of 2000 m/min, the annealing is done with a voltage of 40 V and a current of 20 A; subjecting the second wire blank to annealing thermal treatment to obtain a finished electrode wire with a diameter of 0.10 mm and having an external shell with a thickness of 4 um, the thermal treatment is carried out at 230°C for 3 hrs. Finally, the finished product obtained after the thermal treatment is wound on to shafts of different types.

The chemical composition of the external shell of the finished electrode wire is: 85% Zn, 12.5% Cu, 0.7% Ag, 1.5% Ni, 0.09% Al, 0.06% P and 0.15% impurities. In this embodiment, the addition of Ag, Ni, Al and P will increase the dislocation of Cu-Zn alloy atoms in the wire blank during the stretching, it will result in large distortion of lattices at the grain boundary and the energy will be increased. Accordingly, during the thermal treatment the zinc atoms in η-phase of the external shell are likely to diffusively migrate toward the core ((α+β)-phase), aiding the formation of the ε-phase structure in the external shell. The atoms transfer between the external shell and the core, accordingly, the defects resulting from the stretching such as atomic dislocation and vacancies, are gradually reduced, the dislocation density is decreased too, and the activation energy of diffusion is decreased. Meanwhile, the melting point of the ε-phase structure is gradually increased compared to that of the original pure zinc in η-phase, and the bonding force among the atoms is strengthened. Furthermore, it is easy to form a ε-phase structure in the external shell under the thermal treatment conditions of this embodiment. As shown in Fig. 7, the core in the finished electrode wire is in (α+β)-phase, the ε-phase in the structure of the external shell has a content of nearly 100 wt% and is uniformly distributed on the surface of the core, and there is no other phase in the structure of the external shell.

The elongation rate of the finished electrode wire is tested by a universal electronic stretcher, and the melting point of the external shell thereof is tested by a differential thermal analyzer. The electrical spark machining precision and cutting speed of the high-precision zinc-based alloy electrode wire prepared in this embodiment are tested, with material SKD61 as an object material. All the test result data is shown in Table 1.

### Embodiment 9

The following steps are carried out: mixing alloy in proportion by mixing the following materials in mass percentage: 64% Cu, 0.02% Zr, 1.3% Si, 0.15% P and 0.05% Co, with the balance being Zn and unavoidable impurities which originate from raw material or are introduced during smelting, and the total content of unavoidable impurities is 0.5%; smelting above mixed alloy in an induction furnace, and casting smelted mixed alloy into an alloy wire blank with a diameter of 12 mm; then, obtaining a base wire blank with a diameter of 1.5 mm by extruding or multi-stage stretching and annealing the wire blank; then, degreasing the base wire blank, washing the base wire blank with acid, washing the base wire blank with water, then galvanizing the base wire blank, with an electroplating current of 2500 A and a voltage of 220 V, to obtain a first wire blank with a galvanized layer having a thickness of 15 um; next, stretching and annealing the electroplated first wire blank to obtain a second wire blank, the stretching is done with a speed of 1500 m/min, the annealing is done with a voltage of 10 V and a current of 15 A; subjecting the second wire blank to alloying thermal treatment to obtain a finished electrode wire with a diameter of 0.10 mm and having an external shell with a thickness of 3 um, the thermal treatment is carried out at 140°C for 16 hrs. Finally, the finished product obtained after the thermal treatment is wound onto shafts of different types.

The chemical composition of the external shell of the finished electrode wire is: 89% Zn, 10.1% Cu, 0.012% Zr, 0.8% Si, 0.05% P, 0.02% Co and 0.018% impurities. In this embodiment, the addition of Zr, Si, P and Co, it will increase the dislocation of Cu-Zn alloy atoms in the wire blank during the stretching, it will result in large distortion of lattices at the grain boundary and the energy will be increased. Accordingly, during the thermal treatment the zinc atoms in η-phase of the external shell are likely to diffusively migrate toward the core ((α+β)-phase), aiding the formation of the ε-phase structure in the external shell. The atoms transfer between the external shell and the core, accordingly, the defects resulting from the stretching such as atomic dislocation and vacancies, are gradually reduced, the dislocation density is decreased too, and the activation energy of diffusion is decreased. Meanwhile, the melting point of the ε-phase structure is gradually increased compared to that of the original pure zinc in η-phase, and the bonding force among the atoms is strengthened. Furthermore, it is easy to form a ε-phase structure in the external shell under the thermal treatment conditions of this embodiment. As shown in Fig. 6, the core in the finished electrode wire is in (α+β)-phase, the ε-phase in the structure of the external shell has a content of 97 wt% and is uniformly distributed on the surface of the core, and the remainder is in η-phase.

The elongation rate of the finished electrode wire is tested by a universal electronic stretcher, and the melting point of the external shell thereof is tested by a differential thermal analyzer. The electrical spark machining precision and cutting speed of the high-precision zinc-based alloy electrode wire prepared in this embodiment are tested, with material SKD61 as an object material. All the test result data is shown in Table 1.

### Embodiment 10

The following steps are carried out: mixing alloy in proportion by mixing the following materials in mass percentage: 68% Cu, 0.8% Zr, 0.05% Ag, 0.08% B and 0.03% Co, with the balance being Zn and unavoidable impurities which originate from raw material or are introduced during smelting, and the total content of unavoidable impurities is 0.2%; smelting above mixed alloy in an induction furnace, and casting smelted mixed alloy into an alloy wire blank with a diameter of 11 mm; then, obtaining a base wire blank with a diameter of 5 mm by extruding or multi-stage stretching and annealing the wire blank; then, degreasing the base wire blank, washing the base wire blank with acid, washing the base wire blank with water, then galvanizing the base wire blank, with an electroplating current of 3000 A and a voltage of 180 V, to obtain a first wire blank with a galvanized layer having a thickness of 45 um; next, stretching and annealing the electroplated first wire blank to obtain a second wire blank, the stretching is done with a speed of 1500 m/min, the annealing is done with a voltage of 100 V and a current of 10 A; subjecting the second wire blank to alloying thermal treatment to obtain a finished electrode wire with a diameter of 0.10 mm and having an external shell with a thickness of 4 um, the thermal treatment is carried out at 80°C for 25 hrs. Finally, the finished product obtained after the thermal treatment is wound onto shafts of different types.

The chemical composition of the external shell of the finished electrode wire is: 87% Zn, 12.2% Cu, 0.5% Zr, 0.03% Ag, 0.03% B, 0.01% Co and 0.23% impurities. In this embodiment, the addition of Zr, Ag, B and Co will increase the dislocation of Cu-Zn alloy atoms in the wire blank during the stretching, it will result in large distortion of lattices at the grain boundary and the energy will be increased. Accordingly, during the thermal treatment the zinc atoms in η-phase of the external shell are likely to diffusively migrate toward the core ((α+β)-phase), aiding the formation of the ε-phase structure in the external shell. The atoms transfer between the external shell and the core, accordingly, the defects resulting from the stretching such as atomic dislocation and vacancies, are gradually reduced, the dislocation density is decreased too, and the activation energy of diffusion is decreased. Meanwhile, the melting point of the ε-phase structure is gradually increased compared to that of the original pure zinc in η-phase, and the bonding force among the atoms is strengthened. Furthermore, it is easy to form a ε-phase structure in the external shell under the thermal treatment conditions of this embodiment. As shown in Fig. 6, the core in the finished electrode wire is in (α+β)-phase, the ε-phase in the structure of the external shell has a content of 99 wt% and is uniformly distributed on the surface of the core, and the remainder is in η-phase.

The elongation rate of the finished electrode wire is tested by a universal electronic stretcher, and the melting point of the external shell thereof is tested by a differential thermal analyzer. The electrical spark machining precision and cutting speed of the high-precision zinc-based alloy electrode wire prepared in this embodiment are tested, with material SKD61 as an object material. All the test result data is shown in Table 1.

### Comparative Example 1

The following steps are carried out: mixing alloy in proportion by mixing the following materials in mass percentage: 66% Cu, with the balance being Zn and unavoidable impurities which originate from raw material or are introduced during smelting, and the total content of unavoidable impurities is 0.3%; smelting above mixed alloy in an induction furnace, and casting smelted mixed alloy into an alloy wire blank with a diameter of 8 mm; then, obtaining a base wire blank with a diameter of 3 mm by extruding or multi-stage stretching and annealing the wire blank; then, degreasing the base wire blank, washing the base wire blank with acid, washing the base wire blank with water, then galvanizing the base wire blank, with an electroplating current of 1500 A and a voltage of 200 V, to obtain a first wire blank with a galvanized layer having a thickness of 40 um; next, stretching and annealing the electroplated first wire blank to obtain a second wire blank, the stretching is done with a speed of 500 m/min, the annealing is done with a voltage of 80 V and a current of 50 A; subjecting the second wire blank to alloying thermal treatment to obtain a finished electrode wire with a diameter of 0.10 mm and having an external shell with a thickness of 4 um, the thermal treatment is carried out at 208°C for 72 hrs. Finally, the finished product obtained after the thermal treatment is wound onto shafts of different types. The chemical composition of the external shell of the finished electrode wire is: 92.1% Zn, 7.6% Cu and 0.3% impurities. As shown in Fig. 8, the ε-phase in the structure of the external shell has a content of 8wt%, and the remainder is in η-phase.

The elongation rate of the finished electrode wire is tested by a universal electronic stretcher, and the melting point of the external shell thereof is tested by a differential thermal analyzer. The electrical spark machining precision and cutting speed of the electrode wire prepared in the comparative example 1 are tested, with material SKD61 as an object material. All the test result data is shown in Table 1.

### Comparative Example 2

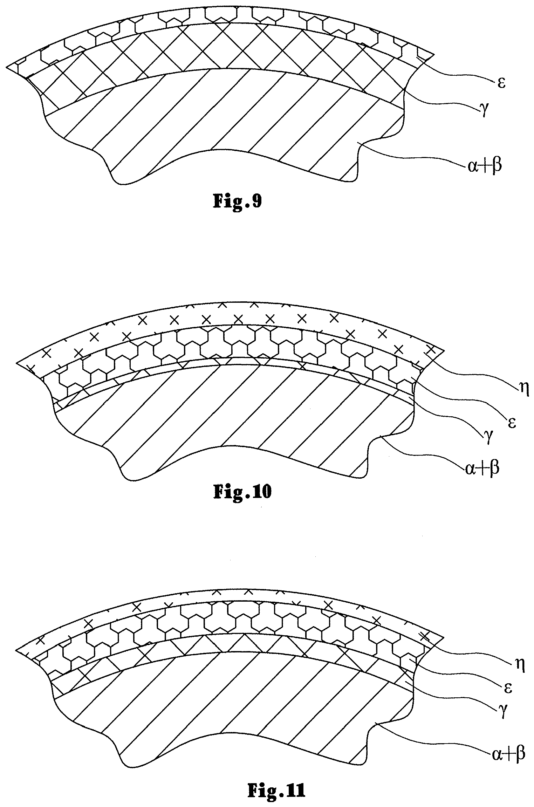

The following steps are carried out: mixing alloy in proportion by mixing the following materials in mass percentage: 60% Cu, with the balance being Zn and unavoidable impurities which originate from raw material or are introduced during smelting, and the total content of unavoidable impurities is 0.4%; smelting above mixed alloy in an induction furnace, and casting smelted mixed alloy into an alloy wire blank with a diameter of 15 mm; then, obtaining a base wire blank with a diameter of 1 mm by extruding or multi-stage stretching and annealing the wire blank; then, degreasing the base wire blank, washing the base wire blank with acid, washing the base wire blank with water, then galvanizing the base wire blank, with an electroplating current of 3000 A and a voltage of 220 V, to obtain a first wire blank with a galvanized layer having a thickness of 10 um; next, stretching and annealing the electroplated first wire blank to obtain a second wire blank, the stretching is done with a speed of 2000 m/min, the annealing is done with a voltage of 40 V and a current of 20 A; subjecting the second wire blank to alloying thermal treatment to obtain a finished electrode wire with a diameter of 0.10 mm and having an external shell with a thickness of 3 um, the thermal treatment is carried out at 105°C for 100 hrs. Finally, the finished product obtained after the thermal treatment is wound onto shafts of different types. The chemical composition of the external shell of the finished electrode wire is: 65.2% Zn, 34.62% Cu and 0.18% impurities. As shown in Fig. 9, the ε-phase in the structure of the external shell has a content of 10 wt%, and the remainder is in γ-phase.

The elongation rate of the finished electrode wire is tested by a universal electronic stretcher, and the melting point of the external shell thereof is tested by a differential thermal analyzer. The electrical spark machining precision and cutting speed of the electrode wire prepared in the comparative example 2 are tested, with material SKD61 as an object material. All the test result data is shown in Table 1.

### Comparative Example 3

The following steps are carried out: mixing alloy in proportion by mixing the following materials in mass percentage: 60% Cu, 1.5% Ag, 0.02% Ni and the balance being Zn and unavoidable impurities which originate from raw material or are introduced during smelting, and the total content of unavoidable impurities is 0.3%; smelting above mixed alloy in an induction furnace, and casting smelted mixed alloy into an alloy wire blank with a diameter of 8 mm; then, obtaining a base wire blank with a diameter of 1 mm by extruding or multi-stage stretching and annealing the wire blank; then, degreasing the base wire blank, washing the base wire blank with acid, washing the base wire blank with water, then galvanizing the base wire blank, with an electroplating current of 1600 A and a voltage of 200 V, to obtain a first wire blank with a galvanized layer having a thickness of 15 um; next, stretching and annealing the electroplated first wire blank to obtain a second wire blank, the stretching is done with a speed of 1000 m/min, the annealing is done with a voltage of 50 V and a current of 25 A; subjecting the second wire blank to alloying thermal treatment to obtain a finished electrode wire with a diameter of 0.10 mm and having an external shell with a thickness of 3.5 um, the thermal treatment is carried out at 190°C for 60 hrs. Finally, the finished product obtained after the thermal treatment is wound onto shafts of different types. The chemical composition of the external shell of the finished electrode wire is: 82.1% Zn, 16.92% Cu, 0.6% Ag, 0.009% Ni and 0.371% impurities. As shown in Fig. 10, the ε-phase in the structure of the external shell has a content of 60 wt%, and the remainder is in γ-phase and η-phase.

The elongation rate of the finished electrode wire is tested by a universal electronic stretcher, and the melting point of the external shell thereof is tested by a differential thermal analyzer. The electrical spark machining precision and cutting speed of the electrode wire prepared in the comparative example 3 are tested, with material SKD61 as an object material. All the test result data is shown in Table 1.

### Comparative Example 4

The following steps are carried out: mixing alloy in proportion by mixing the following materials in weight percentage: 58% Cu, 0.15% Ti, 0.004% Co and the balance being Zn and unavoidable impurities which originate from raw material or are introduced during smelting, and the total content of unavoidable impurities is 0.3%; smelting above mixed alloy in an induction furnace, and casting smelted mixed alloy into an alloy wire blank with a diameter of 10 mm; then, obtaining a base wire blank with a diameter of 1 mm by extruding or multi-stage stretching and annealing the wire blank; then, degreasing the base wire blank, washing the base wire blank with acid, washing the base wire blank with water, then galvanizing the base wire blank, with an electroplating current of 1700 A and a voltage of 210 V, to obtain a first wire blank with a galvanized layer having a thickness of 12 um; next, stretching and annealing the electroplated wire blank to obtain a second wire blank, the stretching is done with a speed of 600 m/min, the annealing is done with a voltage of 10 V and a current of 5 A; subjecting the second wire blank to alloying thermal treatment to obtain a finished electrode wire with a diameter of 0.10 mm and having an external shell with a thickness of 3 um, the thermal treatment is carried out at 135°C for 56 hrs. Finally, the finished product obtained after the thermal treatment is wound onto shafts of different types. The chemical composition of the external shell of the finished electrode wire is: 80.3% Zn, 19.448% Cu, 0.06% Ti, 0.002% Co and 0.19% impurities. As shown in Fig. 11, the ε-phase in the structure of the external shell is 58 wt%, and the remainder is in γ-phase and η-phase.

The elongation rate of the finished electrode wire is tested by a universal electronic stretcher, and the melting point of the external shell thereof is tested by a differential thermal analyzer. The electrical spark machining precision and cutting speed of the electrode wire prepared in the comparative example 4 are tested, with material SKD61 as an object material. All the test result data is shown in Table 1.

### Comparative Example 5

A galvanized electrode wire includes a core composed of Cu-Zn alloy with a diameter of 0.5-5mm, the core contains 63% Cu, with the rest being Zn and unavoidable impurities, and the content of unavoidable impurities is less than or equal to 0.3%. The surface of the core is galvanized directly to obtain a plated layer having a thickness of 20um, followed by stretching and annealing to obtain a galvanized electrode wire with a diameter of 0.05-0.35 mm, and the external shell has a structure in η-phase.

The elongation rate of the electrode wire is tested by a universal electronic stretcher, and the melting point of the external shell thereof is tested by a differential thermal analyzer. The electrical spark machining precision and cutting speed of the galvanized electrode wire are tested, with material SKD61 as an object material. All the test result data is shown in Table 1.

### Comparative Example 6

A brass electrode wire has a wire blank composed of Cu-Zn alloy with a diameter of 0.5-5mm, the wire blank contains 63% Cu, with the rest being Zn and unavoidable impurities, and the content of unavoidable impurities is less than or equal to 0.3%. Stretching and annealing are carried out directly to obtain a brass electrode wire with a diameter of 0.05-0.35 mm, and the external shell has a structure in (α+β)-phase.

The elongation rate of the electrode wire is tested by a universal electronic stretcher, and the melting point of the external shell thereof is tested by a differential thermal analyzer. The electrical spark machining precision and cutting speed of the brass electrode wire are tested, with material SKD61 as an object material. All the test result data is shown in Table 1.

### Comparative Example 7

A high-speed electrode wire has a core composed of red copper with a diameter of 0.5-5mm. The surface of the core is then galvanized to obtain a first wire blank with a plated layer having a thickness of 50um; the first wire blank is subjected to thermal treatment to obtain a second wire blank, the thermal treatment is carried out at 550°C for 10 hrs; finally the thermally treated second wire blank is stretched and annealed to obtain a high-speed electrode wire with a diameter of 0.05-0.35 mm, and the external shell has a structure in β-phase.

The elongation rate of the electrode wire is tested by a universal electronic stretcher, and the melting point of the external shell thereof is tested by a differential thermal analyzer. The electrical spark machining precision and cutting speed of the high-speed electrode wire are tested, with material SKD61 as an object material. All the test result data is shown in Table 1.

### Comparative Example 8

A coated electrode wire has a core composed of Cu-Zn alloy with a diameter of 0.5-5mm. The component composition of this core is the same as that of the core of the finished electrode wire in Embodiment 1. The surface of the core is galvanized to obtain a plated layer having a thickness of 30um; the first wire blank is subjected to thermal treatment to obtain a second wire blank, the thermal treatment is carried out at 450°C for 6 hrs; finally the thermally treated second wire blank is stretched and annealed to obtain a coated electrode wire with a diameter of 0.05-0.35 mm, and the external shell has a structure in γ-phase.

The elongation rate of the electrode wire is tested by a universal electronic stretcher, and the melting point of the external shell thereof is tested by a differential thermal analyzer. The electrical spark machining precision and cutting speed of the coated electrode wire are tested, with material SKD61 as an object material. All the test result data is shown in Table 1.

### Comparative Example 9

A composite electrode wire has a core composed of Cu-Zn alloy with a diameter of 0.5-5mm. The component composition of this core is the same as that of the core of the finished electrode wire in Embodiment 3. The surface of the core is galvanized to obtain a plated layer having a thickness of 40um; the first wire blank is subjected to thermal treatment to obtain a second wire blank, the thermal treatment is carried out at 600°C for 12 hrs; the wire blank is stretched and annealed a first time, then the surface is plated with brass in γ-phase, and after the thermal treatment the wire blank is finally stretched and annealed a second time to obtain the composite electrode wire with a diameter of 0.05-0.35 mm, and the external shell has a structure in (β+γ)-phase.

The elongation rate of the electrode wire is tested by a universal electronic stretcher, and the melting point of the external shell thereof is tested by a differential thermal analyzer. The electrical spark machining precision and cutting speed of the composite electrode wire are tested, with material SKD61 as an object material. All the test result data is shown in Table 1.

Table 1 shows the metallurgical structure of the external shell, the electrical spark wire manufacturing precision ratio, the cutting speed, the elongation rate and the melting point of electrode wires in the embodiments and comparative examples.

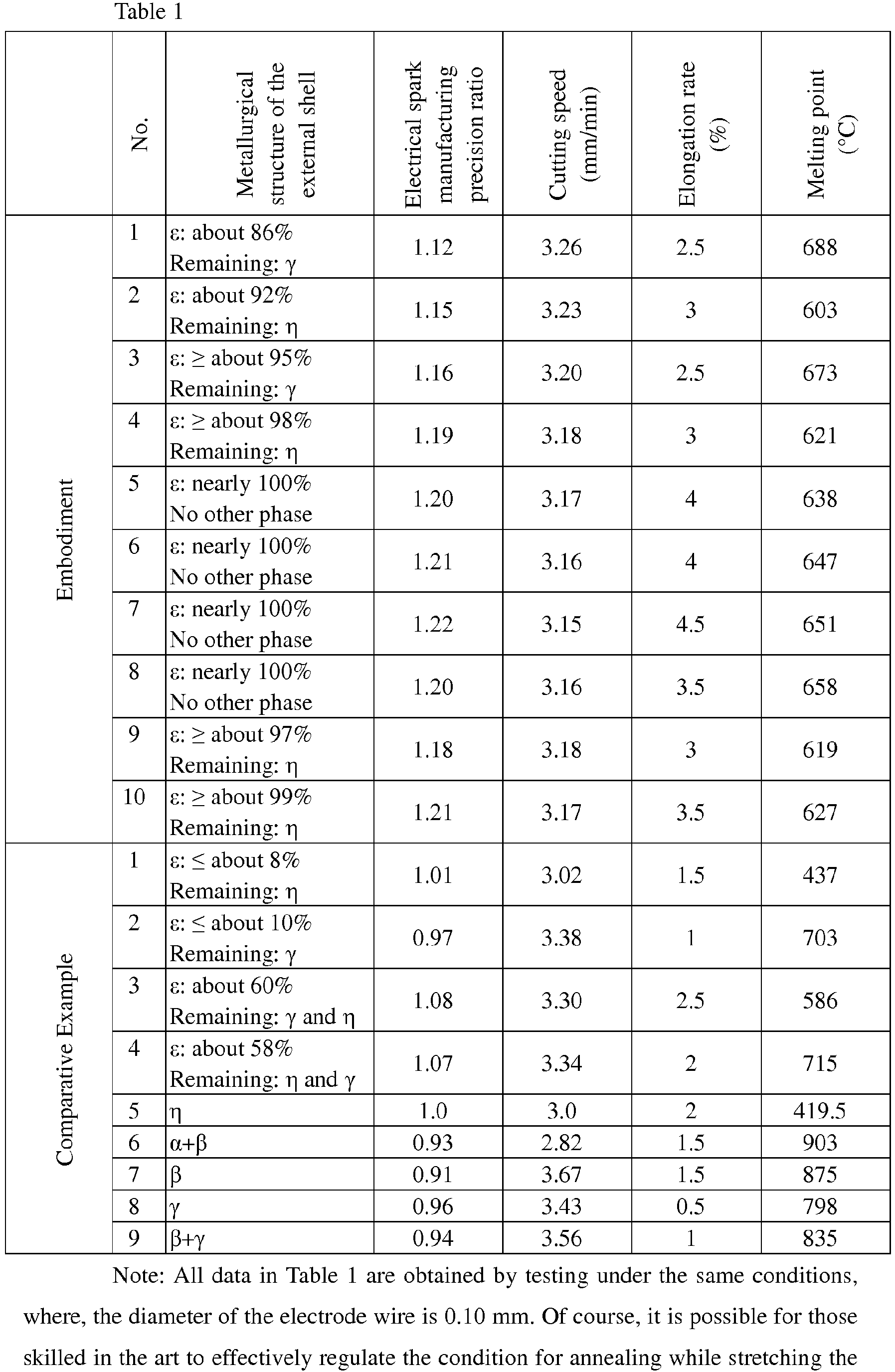

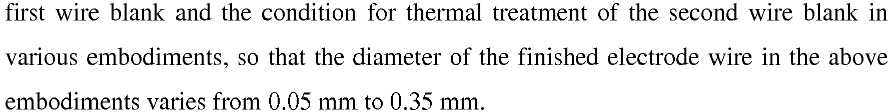

Taking the electrical spark manufacturing precision of Comparative Example 5 as a base, the ratio of the manufacturing precision of Embodiments 1-10 and Comparative Examples 1, 2, 3, 4, 6, 7, 8, 9 respectively to that of Comparative Example 5 serves as a performance parameter reflecting their manufacturing precision.

In conclusion, the high-precision Zn-based alloy electrode wire of the present invention has a significantly superior electrical spark manufacturing precision, and a cutting speed up to that of similar products, a good elongation capability and a higher melting point.

## Claims

1. A high-precision zinc-based alloy electrode wire, comprising a core and an external shell covering the core, the core being made of brass, **characterized in that** the composition in mass percentage of the components of the external shell is:
Zn: 70.5-95%; Cu: 2.5-27%; X: 0.02-4.0%; Y: 0.002-0.4%;
and unavoidable impurities introduced by raw material, and the total content of unavoidable impurities is less than or equal to 0.3%;
where, X refers to any two elements selected from Ni, Ag, Cr, Si and Zr, and the content of each of these two elements is 0.01-2.0%; and Y refers to any two elements selected from Ti, Al, Co, B, and P, and the content of each of these two elements is 0.001-0.2%;
the external shell has a thickness of 2-4 um, the content of ε-phase in a structure of the external shell is above 80 wt%, and a remainder component of the external shell is either γ-phase or η-phase; and the ε-phase is uniformly distributed on a surface of the core.

2. The high-precision zinc-based alloy electrode wire as claimed in claim 1, **characterized in that** the composition in mass percentage of the components of the external shell is:
Zn: 78.5-85%; Cu: 12.5-19%; X: 0.02-4.0%; Y: 0.002-0.4%;
and unavoidable impurities introduced by raw material;
and the external shell has a structure wholly in ε-phase, and the ε-phase is uniformly distributed on a surface of the core.

3. A method for manufacturing a high-precision zinc-based alloy electrode wire, **characterized by** comprising the following steps:
1) mixing alloy in proportion by mixing, in mass percentage: 57-68% Cu, 0.03-4.5% X, 0.004-0.5% Y, with the balance being Zn and unavoidable impurities which originate from raw material or are introduced during smelting, and the total content of unavoidable impurities is less than or equal to 0.5%; where X refers to any two elements selected from Ni, Ag, Cr, Si, and Zr, and the content of each of these two elements is 0.015-2.25%; and Y refers to any two elements selected from Ti, Al, Co, B, and P, and the content of each of these two elements is 0.002-0.25%;
2) smelting mixed alloy in an induction furnace, and casting smelted mixed alloy into an alloy wire blank with a diameter of 8-15 mm;
3) obtaining a base wire blank with a diameter of 0.5-5 mm by extruding or multi-stage stretching and annealing the wire blank;
4) degreasing the base wire blank, washing the base wire blank with acid, washing the base wire blank with water, then galvanizing the base wire blank, with an electroplating current of 1500-3000 A and a voltage of 150-220 V, to obtain a first wire blank with a galvanized layer having a thickness of 0.5-50 um;
5) stretching and annealing the electroplated first wire blank to obtain a second wire blank;
6) finally, subjecting the second wire blank to alloying thermal treatment to obtain a finished electrode wire with a diameter of 0.05-0.35 mm.

4. The method for manufacturing a high-precision zinc-based alloy electrode wire as claimed in claim 3, **characterized in that** in Step 5, the stretching is done with a speed of 500-2000 m/min, the annealing is done with a voltage of 10-100 V and a current of 10-50 A.

5. The method for manufacturing a high-precision zinc-based alloy electrode wire as claimed in claim 3, **characterized in that** in Step 6, the thermal treatment is carried out at 50-230°C for 3-30 hrs.

## Patentansprüche

1. Hochpräzisions-Elektrodendraht aus einer Zinkbasislegierung, umfassend einen Kern und eine den Kern bedeckende äußere Hülle, wobei der Kern aus Messing gebildet ist, **dadurch gekennzeichnet, dass** die Zusammensetzung in Massenanteilen der Bestandteile der äußeren Hülle folgende ist:
Zn: 70,5-95 %; Cu: 2,5-27 %; X: 0,02-4,0 %; Y: 0,002-0,4 %; und
unvermeidbare durch Rohmaterial eingebrachte Verunreinigungen, und wobei der gesamte Gehalt der unvermeidbaren Verunreinigungen weniger oder gleich 0,3 % beträgt;
wobei X beliebige zwei Elemente, ausgewählt aus Ni, Ag, Cr, Si und Zr, bezeichnet, und wobei der Gehalt jedes dieser zwei Elemente 0,01 %-2,0 % beträgt; und wobei Y beliebige zwei Elemente, ausgewählt aus Ti, AI, Co, B und P, bezeichnet und wobei der Gehalt jedes dieser zwei Elemente 0,001-0,2 % beträgt
wobei die äußere Hülle eine Dicke von 2-4 µm aufweist, wobei der Gehalt der ε-Phase in einer Struktur der externen Hülle über 80 Gewichtsprozent beträgt, und wobei ein Restbestandteil der äußeren Hülle entweder eine γ-Phase oder η-Phase ist; und wobei die ε-Phase gleichmäßig auf einer Oberfläche des Kerns verteilt ist.

2. Hochpräzisions-Elektrodendraht aus einer Zinkbasislegierung nach Anspruch 1, **dadurch gekennzeichnet, dass** die Zusammensetzung in Massenanteilen der Bestandteile der äußeren Hülle ist:
Zn: 78,5-85 %; Cu: 12,5-19 %; X: 0,02-4,0 %; Y: 0,002-0,4 %;
und unvermeidbare durch Rohmaterial eingebrachte Verunreinigungen;
und wobei die äußere Hülle eine vollständig in einer ε-Phase vorliegende Struktur aufweist, und wobei die ε-Phase gleichmäßig auf einer Oberfläche des Kerns verteilt ist.

3. Verfahren zum Herstellen eines Hochpräzisions-Elektrodendrahtes aus einer Zinkbasislegierung, **gekennzeichnet durch** die folgenden Schritte:
1) Mischen einer Legierung im Verhältnis durch Mischen, in Massenanteilen, von:
57-68 % Cu, 0,03-4,5 % X, 0,004-0,5 % Y, wobei der Rest Zn und unvermeidbare Verunreinigungen, welche von Rohmaterial stammen oder während des Einschmelzens eingebracht werden, ist, und wobei der gesamte Gehalt der unvermeidbaren Verunreinigungen weniger oder gleich 0,5 % beträgt;
wobei X beliebige zwei Elemente, ausgewählt aus Ni, Ag, Cr, Si und Zr, bezeichnet, und wobei der Gehalt jedes dieser zwei Elemente 0,015-2,25 % beträgt; und wobei Y beliebige zwei Elemente, ausgewählt aus Ti, AI, Co, B und P, bezeichnet und wobei der Gehalt jedes dieser zwei Elemente 0,002-0,25 % beträgt;
2) Einschmelzen der Mischlegierung in einem Induktionsofen, und Gießen der geschmolzenen Mischlegierung zu einem Legierungsdraht .Rohling mit einem Durchmesser von 8-15 mm;
3) Erhalten eines Grunddraht-Rohlings mit einem Durchmesser von 0,5-5 mm durch Extrudieren oder mehrstufiges Dehnen und Tempern des Draht-Rohlings;
4) Entfetten des Grunddraht-Rohlings, Waschen des Grunddraht-Rohlings mit Säure, Waschen des Grunddraht-Rohings mit Wasser, dann Galvanisieren des Grunddraht-Rohlings mit einem Galvanisierungsstrom von 1500-3000 A und einer Spannung von 150-220 V, um einen ersten Draht-Rohling mit einer galvanischen Schicht mit einer Dicke von 0,5-50 µm zu erhalten;
5) Dehnen und Tempern des galvanisierten ersten Draht-Rohlings, um einen zweiten Draht-Rohling zu erhalten;
6) Schließlich Unterziehen des zweiten Draht-Rohlings einer Wärmebehandlung zur Legierungsbildung, um einen fertigen Elektrodendraht mit einem Durchmesser von 0,05-0,35 mm zu erhalten.

4. Verfahren zum Herstellen eines Hochpräzisions-Elektrodendrahtes aus einer Zinkbasislegierung nach Anspruch 3, **dadurch gekennzeichnet, dass** im Schritt 5 das Dehnen mit einer Geschwindigkeit von 500-2000 m/min durchgeführt wird, wobei das Tempern mit einer Spannung von 10-100 V und einem Strom von 10-50 A durchgeführt wird.

5. Verfahren zum Herstellen eines Hochpräzisions-Elektrodendrahtes aus einer Zinkbasislegierung nach Anspruch 3, **dadurch gekennzeichnet, dass** im Schritt 6 die Wärmebehandlung bei 50-230 °C für 3-30 Stunden vorgenommen wird.

## Revendications

1. Fil-électrode en alliage à base de zinc de haute précision, comprenant un noyau et une enveloppe externe couvrant le noyau, le noyau étant réalisé en laiton, **caractérisé en ce que** la composition en pourcentage en masse des composants de l'enveloppe externe est :
Zn : 70,5 à 95% ; Cu: 2,5 à 27% ; X : 0,02 à 4.0% ; Y : 0,002 à 0,4% ;
et des impuretés inévitables introduites par la matière première, et la teneur totale en impuretés inévitables est inférieure ou égale à 0,3% ;
où X désigne deux éléments quelconques choisis parmi Ni, Ag, Cr, Si et Zr, et la teneur en chacun de ces deux éléments est comprise entre 0,01 et 2,0% ; et Y désigne deux éléments quelconques choisis parmi Ti, Al, Co, B et P, et la teneur en chacun de ces deux éléments est comprise entre 0,001 et 0,2% ;
l'enveloppe externe a une épaisseur comprise entre 2 et 4 µm, la teneur en phase ε dans une structure de l'enveloppe externe est supérieure à 80% en poids, et un composant restant de l'enveloppe externe est soit en phase γ soit en phase η ; et la phase ε est uniformément répartie sur une surface du noyau.

2. Fil-électrode en alliage à base de zinc de haute précision tel que revendiqué dans la revendication 1, **caractérisé en ce que** la composition en pourcentage en masse des composants de l'enveloppe externe est :
Zn : 78,5 à 85% ; Cu : 12,5 à 19% ; X : 0,02 à 4,0% ; Y : 0,002 à 0,4% ;
et des impuretés inévitables introduites par la matière première ;
et l'enveloppe externe a une structure entièrement en phase ε, et la phase ε est uniformément répartie sur une surface du noyau.

3. Procédé de fabrication d'un fil-électrode en alliage à base de zinc de haute précision, **caractérisé en ce qu'**il comprend les étapes suivantes qui consistent :
1) à mélanger un alliage en proportion en mélangeant, en pourcentage en masse : 57 à 68% de Cu, 0,03 à 4,5% de X, 0,004 à 0,5% de Y, avec le reste étant du Zn et des impuretés inévitables qui proviennent de la matière première ou qui sont introduites pendant la fusion, et la teneur totale en impuretés inévitables est inférieure ou égale à 0,5% ; où X désigne deux éléments quelconques choisis parmi Ni, Ag, Cr, Si et Zr, et la teneur en chacun de ces deux éléments est comprise entre 0,015 et 2,25% ; et Y désigne deux éléments quelconques choisis parmi Ti, Al, Co, B et P, et la teneur en chacun de ces deux éléments est comprise entre 0,002 et 0,25% ;
2) à faire fondre l'alliage mélangé dans un four à induction et à couler l'alliage mélangé fondu pour obtenir une ébauche de fil en alliage ayant un diamètre compris entre 8 et 15 mm ;
3) à obtenir une ébauche de fil de base ayant un diamètre compris entre 0,5 et 5 mm par extrusion ou étirage à plusieurs étages et recuit de l'ébauche de fil ;
4) à dégraisser l'ébauche de fil de base, à laver l'ébauche de fil de base avec de l'acide, à laver l'ébauche de fil de base avec de l'eau, puis à galvaniser l'ébauche de fil de base avec un courant de galvanoplastie de 1500 à 3000 A et une tension de 150 à 220 V, pour obtenir une première ébauche de fil avec une couche galvanisée ayant une épaisseur comprise entre 0,5 et 50 µm ;
5) à étirer et à recuire la première ébauche de fil revêtue par galvanoplastie pour obtenir une deuxième ébauche de fil ;
6) à soumettre, enfin, la deuxième ébauche de fil à un traitement thermique d'alliage pour obtenir un fil-électrode fini ayant un diamètre compris entre 0,05 et 0,35 mm.

4. Procédé de fabrication d'un fil-électrode en alliage à base de zinc de haute précision tel que revendiqué dans la revendication 3, **caractérisé en ce que** dans l'étape 5, l'étirage est effectué à une vitesse comprise entre 500 et 2000 m/min, le recuit est effectué à une tension comprise entre 10 et 100 V et un courant compris entre 10 et 50 A.

5. Procédé de fabrication d'un fil-électrode en alliage à base de zinc de haute précision tel que revendiqué dans la revendication 3, **caractérisé en ce que** dans l'étape 6, le traitement thermique est réalisé à une température comprise entre 50 et 230°C pendant 3 à 30 heures.
